# EUROPEAN PATENT APPLICATION

(11) **EP 0 990 730 A2**
(43) Date of publication of application: **05.04.2000**
(21) Application number: 99307578.7
(22) Date of filing: 24.09.1999
(51) Int. Cl.: D04H 11/00, D04H 13/00, D04H 1/42

(54) **Fabric composition**

(30) Priority: 02.10.1998 GB 9821371
(71) Applicant: Rawson Carpets Limited, Wakefield, West Yorkshire WF1 5PS (GB)
(72) Inventor: Burns, Gerard Francis Rawson Carpets Limited, Wakefield West Yorkshire WF1 5PS (GB)
(74) Representative: Sherrard-Smith, Hugh

(57) **Abstract**

Fibres 10 comprise discrete regions of polypropylene 18 that are surrounded by polyethylene 20. The fibres are connected together by heating the fibres such that as the melting point of the polyethylene is approached or reached or passed the abutting surfaces of the fibres soften and adhere together to become integral. Heating of the fibres causes shrinkage of the fibres such that a fabric formed from such fibres shrinks to pull the fibres together on heating.

The fibres relax after their initial contraction to lose a lot of the tension that caused the fibres in the fabric to be drawn in.

## Description

The present invention relates to a fabric and to a method of making a fabric. The invention is particularly, although not exclusively applicable to fabrics that comprise floor coverings such as carpets or tiles.

In the manufacture of floor coverings such as carpets polypropylene fibres are mechanically blended together, carded, formed into a multi layer web and then pre-needled prior to a final needling interconnecting the fibres together. In order to hold the fibres together though the fabric is passed through a water based styrene butadiene dispersion with the dispersion subsequently being drained and with the fabric then being heated to evaporate remaining water. The styrene butadiene bonds those parts of the fibres that are in contact with each other together. There can be many problems though with the formation of such floor coverings.

One problem is that heat has to be applied to the fabric in order to evaporate the water. This is expensive, time consuming and bad for the environment.

A further problem is that the covering is not easy to recycle as the expensive and time consuming process of removing the styrene butadiene has to be undergone before the fabrics are able to be used again.

In addition, because surfactants are present in the styrene butadiene dispersion, if water leaks onto a carpet then the styrene butadiene will carry dirt and oils outwardly from where the water is dropping onto the carpet to discolour the carpet and present an unsightly ring surrounding the area where the water has been leaking.

Furthermore the styrene butadiene has the effect of altering the colour of the fibres and therefore the colouring of the carpet. It is very difficult to control the styrene butadiene dispersion and its application to the fibres and the removal of excess styrene butadiene and the evaporation of the water. Consequently small differences in the colour of the fabric can occur. These are often not visible until after the carpet has been installed thereby necessitating removal and replacement of faulty product and wastage of product.

When ribbed coverings are being made it frequently happens that the ribs at one side are, for instance 0.5 mm higher than the ribs at another side. When the styrene butadiene binder is applied the fault is then fixed in the product and detracts from the appearance of the product. Again such faults may only be visible when the carpet has been installed.

In addition, in order to get a fabric to the required density it is necessary to subject the fabric to a very extensive needling operation as the final extent of each fibre in the fabric and thus the density of the fabric is determined solely by the needling.

It is an object of the present invention to attempt to overcome at least some of the above described disadvantages.

In this specification, multiconstituent fibres are defined as fibres that have at least two discrete materials, the materials having different melting points.

According to one aspect of the present invention a fabric includes at least some multiconstituent fibres that are connected together at their abutting surfaces.

Fibres in the fabric may be directly connected together and may be integral at their contacting faces.

The multiconstituent fibres will hereinafter be referred to as biconstituent fibres but it will be appreciated that "biconstituent" - includes two or more materials.

Fibres may be connected together by having been heated towards the melting point of an exterior portion of those fibres or to the melting point or beyond the melting point. The melting point may be more than 120°C or less than 130°C or in the region of 125°C.

The biconstituent fibres may comprise an outer material surrounding at least one portion of another material. There may be several portions that the outer material surrounds and those several portions may be spaced from each other. The biconstituent fibres may comprise a blend of high and low melting point materials. The biconstituent fibres may comprise strands of one material that may be completely surrounded by another material. The strands may only extend a relatively short length along the fibre.

The ratio of low melting point material, by weight, to the weight of the fibre may be 70 to 95% or preferably 90%. The ratio of high melting point material by weight to the weight of the fibre may be 30 to 5% or preferably in the region of 10%.

The cross-section of at least one material within the fibre may be round. The cross-section of the fibre may be round. The material that defines the outer surface of the fibre may completely surround the or each other material in the fibre.

The fabric may include at least a portion that comprises only biconstituent fibre.

The fabric may include other non-biconstituent material such as fibres.

The denier of the biconstituent fibre may be between 10 and 20 and preferably in the region of 15. The denier of any non-biconstituent fibre may be in the region of 15 or greater than 15 or in the region of 60 to 100.

The ratio by weight of non-biconstituent fibres to biconstituent fibres may be greater than 80:20 or 70:30 or 50:50 or 30:70 or may be in the region of 50:50.

The fabric may comprise at least two adjacent layers, at least one of which includes biconstituent fibres. Both adjacent layers may include biconstituent fibres. The layers may be connected together, for instance by needling or alternatively or additionally, by biconstituent fibres being connected together across the adjacent surfaces of those layers.

The fabric may include at least one layer that includes a greater concentration of biconstituent fibres at one depth in that layer than at another depth. That greater concentration may be at an outer region of that layer or at an inner region of that layer.

The fabric may include biconstituent fibres extending at least partly around non-biconstituent fibres. Where the biconstituent fibres extend around non-biconstituent fibres they may extend in a generally straight direction between adjacent fibres that the biconstituent fibres extend at least partially around. The biconstituent fibres may have caused non-biconstituent fibres to have been drawn towards each other or they may not have caused those fibres to have been drawn towards each other to any significant extent.

The biconstituent fibres may have contracted by more than 10% or more than 20% or more than 30% from their original lengths. That contraction may have been arranged to substantially cease when contraction has been prevented. The biconstituent fibres may exert a tension of less than 0.5g/denier or less than 0.25g/denier or less than 0.lg/denier or less than 0.05g/denier.

The fabric may have had its density increased as a result of the biconstituent fibres lengths having decreased.

The fabric may include biconstituent fibres and non-biconstituent fibres. The denier of the biconstituent fibres may be less than the denier of the non-biconstituent fibres.

The biconstituent fibres may include polypropylene or polyethylene or both polypropylene and polyethylene.

The fabric may comprise a structural fabric. The fabric may comprise a shaped fabric.

According to another aspect of the present invention a method of making a fabric comprises incorporating at least some multiconstituent fibres into a fabric and connecting those fibres together at their abutting surfaces.

The method may comprise directly connecting the fibres together at their abutting surfaces and the method may comprise making the biconstituent fibres integral at their abutting surfaces.

The method may comprise connecting the biconstituent fibres together by heating the fibres such as by heating the fibres towards the melting point of an exterior portion of those biconstituent fibres or to the melting point or beyond the melting point. The method may comprise heating the exterior portion of those biconstituent fibres to more than 120°C or less than 130°C or in the region of 125°C. The method may comprise connecting the biconstituent fibres together by heating, without the application of pressure.

The method may comprise including biconstituent fibres into a fabric with only biconstituent fibres comprising at least part of the fabric.

The method may comprise including other non-biconstituent material, such as fibres, into the fabric.

The method may comprise forming two layers, at least one of which includes biconstituent fibres.

The method may comprise forming two layers in which adjacent layers comprise biconstituent fibres.

The method may comprise connecting two layers together, for instance by needling or, alternatively or additionally, by connecting biconstituent fibres together across adjacent surfaces of those layers.

The method may comprise making a fabric that includes at least one region that includes a greater concentration of biconstituent fibres at one depth than the concentration of biconstituent fibres at another depth. The method may comprise making the fabric with a greater concentration of biconstituent fibres at an outer region than at an inner region of a layer of fabric.

The method may comprise causing biconstituent fibres to extend at least partially around non-biconstituent fibres. The method may comprise causing the biconstituent fibres to reduce in length whereby biconstituent fibres that extend at least partially around non-biconstituent fibres extend in a generally straight direction between adjacent fibres that the biconstituent fibres extend at least partially around. The method may comprise biconstituent fibres causing non-biconstituent fibres to be drawn towards each other. Alternatively the method may comprise biconstituent fibres reducing in length but not causing any significant drawing together of non-biconstituent fibres.

The method may comprise causing the biconstituent fibres to reduce in length and then relax.

The method may comprise causing biconstituent fibres to contract by more than 10% or more than 20% or more than 30% from their original lengths. The contraction force may be less than 0.5g/denier or less than 0.25g/denier or less than 0.lg/denier or less than 0.05g/denier.

The method may comprise increasing the density of the fabric by causing the lengths of the biconstituent fibres to decrease or, alternatively maintaining the density substantially constant despite the lengths of biconstituent fibres decreasing.

The method may comprise including into the fabric biconstituent fibres and non-biconstituent fibres and the method may comprise combining biconstituent fibres having a reduced denier compared to the denier of non-biconstituent fibres.

The method may comprise forming a shaped or a structural fabric.

The present invention includes any combination of the herein referred to features or limitations.

The present invention can be carried into practice in various ways but several embodiments will now be described, by way of example, with reference to the accompanying drawings, in which:-
Figure 1 is an enlarged schematic perspective view of two biconstituent fibres 10 used with one embodiment of the present invention;
Figure 2 is a schematic graph indicating the length in the biconstituent fibres 10 when they are subject to a constant tension force during an increase in temperature;
Figure 3 is a schematic detailed view of a fabric 14 comprising only biconstituent fibres before the application of heat;
Figure 4 is a schematic view of the fabric 14 shown in Figure 3 after the application of heat;
Figure 5 is a schematic cross-section of a floor covering 16;
Figure 6 is a side view of a pile layer for a carpet;
Figure 7 is a side view of a backing layer for a carpet; and
Figure 8 is a side view of the pile layer of Figure 6 and the carpet layer of Figure 7 connected together.

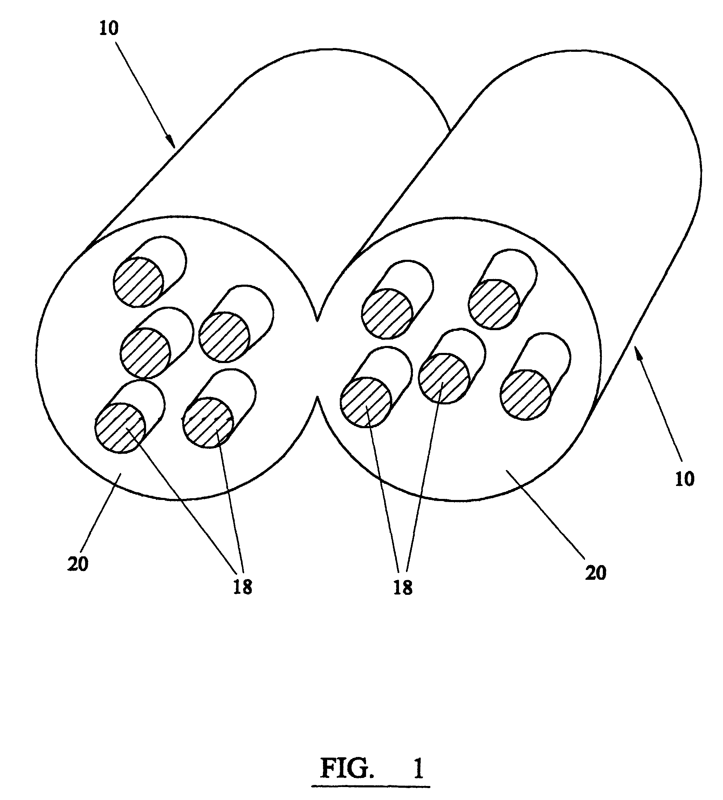

The round cross-sectional fibres 10 shown in Figures 1 each comprise a plurality of discrete regions of polypropylene 18 that are surrounded by polyethylene 20. The fibres are formed by melting and simultaneously extruding a blend of polypropylene and polyethylene and then gripping the fibres as they cool to prevent the natural tendency of the fibres to shrink when cooling.

The fibres 10 may be 70 to 90% by weight of polyethylene and 10 to 30% by weight polypropylene. The polyethylene may be a low density polyethylene having a density of 0.925g/cm³. Preferably these ratios are 10 to 15% polypropylene and 85 to 90% polyethylene. The fibre may optionally also include one or more polyolefin copolymers in an amount of not more than 10% by weight.

The nature of the polymeric components in the extruded fibre is not certain. It is believed to be dispersion of discrete strands or regions of one component surrounded by regions or strands of another component. An important feature is that there is sufficient of the low melting point component in the region of the surface of the fibre to assist bonding. Also there must be sufficient of the high melting point component present in the body of the fibre to provide advantageous strength during heat setting.

The fibres 10 will be sold under the Trade Mark **THERMALINK**.

Polyethylene typically has a melting temperature of between 120° and 130°C whereas polypropylene has a melting point in the region of 165°C. When the fibres are in contact with each other, as shown in Figure 1, and heat is applied two events occur.

The first event is that as the melting point (for instance 125°C) of the polyethylene is approached or reached or passed the abutting portions of the fibres will soften and adhere together or fuse together or melt and become integral thereby holding the fibres together at that point. If the biconstituent fibres are in contact with another fibre, for instance a polypropylene fibre, then the polyethylene of the biconstituent fibres may or may not adhere or bond with the polypropylene of the adjacent fibre. The polyethylene and the polypropylene away from the surfaces of the fibre act as an insulator such that all of the polyethylene does not necessarily reach the temperature of the surface. The surface of the fibre that is not in contact with an adjacent biconstituent fibre may soften and, on cooling, simply return to the more solid structure that it had before heating.

The second event that occurs is that the fibres shrink in length. Typically when the fibre is heated as indicated above it will shrink in the region of 30 or 40% of its original length. The exact amount of shrinkage is controlled partly during the manufacture of the fibre and partly by the amount of heat applied to the fibre and the duration of that heat.

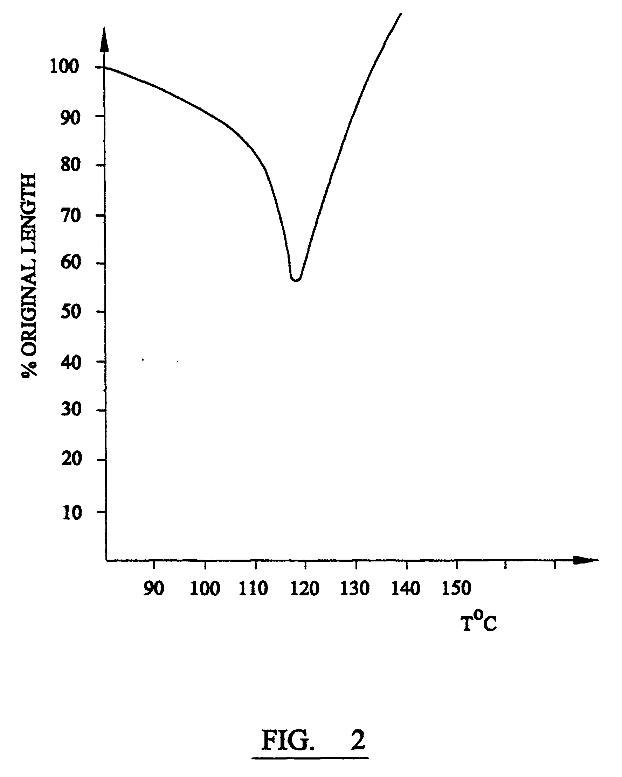

Figure 2 illustrates the properties of the fibres as they are heated under a negligible load. It can be seen that during the initial heating, up to about 80°C no significant shrinkage occurs. From 80°C to 125°C approximately 45% shrinkage occurs. However, before the melting point the fibre is able to increase its length, perhaps even beyond its original length. The increase in length, starts to occur before the melting point is reached or may start when the melting point is reached or shortly before depending upon the tension applied. It is primarily the polyethylene that causes the shrinkage and the polypropylene will have little effect, if any, on the shrinkage as the temperatures are well below its melting point. Thus the integrity of the biconstituent fibre is maintained at all times.

As the biconstituent fibres do not undergo any detectable change in length below around 80°C, once the fibres have been subject to the heat treatment and subsequently cooled any fabric will not tend to expand or contract during normal ambient conditions.

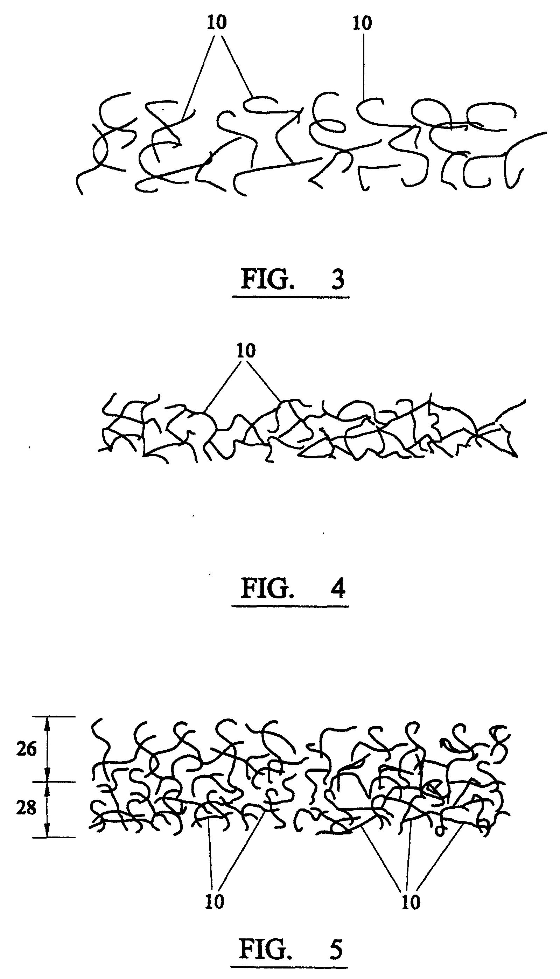

Referring now to Figure 3, a fabric comprising only biconstituent fibres 10 is shown. The fabric has been formed by mechanically blending the fibres together then carding those fibres and subsequently forming a sheet of multiple layers of those fibres, for instance by cross lapping. The layers are then passed through a pre needling stage to form a felt before being passed through a final needling stage to interlock the fibres as shown.

The fabric in Figure 3 is then heated as indicated above, for instance by continually passing a length of fabric through an oven housing at a temperature of 140°C. Although the oven is at this temperature the moving fabric does not remain in the oven long enough to reach this temperature. The fibres shrink to pull each other together. In this respect, the fibres do not extend in a straight line. Rather the fibres will extend in a tortuous path turning first one way around one adjacent fibre, then another way around another fibre and then a still further way around a different fibre. The exact path and the number of other fibres a particular fibre engages will be random to a certain extent but it will also be dependent upon the processing stages of the fabric such as the amount of needling as well as the length of the fibres. As the path of each fibre is tortuous, upon shrinking the fibres which are entwined are pulled inwardly with respect to the general extent of a particular fibre thereby reducing the thickness of the fabric and increasing the density, as shown in Figure 4. In addition to the increase in density, contacting parts of the fibres become connected as discussed above to further interlock the fibres and to hold the fibres in the fabric.

The significance of the fibres relaxing after their initial contraction (as shown in Figure 2) is that the fibres lose a lot of the tension that caused the drawing in of the fibres. Thus whilst a compact excellently interlocked fabric is provided, the fibres do not continue to exert an undue tension which would distort the structure. This feature is enhanced because of the relatively small amount of polypropylene.

The embodiment shown in Figure 5 will now be described. Two separate layers 26 and 28 are made by blending, lapping, pre-needling and needling as described above.

The layer 26 is a pile comprising a mix of polyethylene or polypropylene fibres, or only polypropylene or polyolefin fibres, and the fibres may be a mixture of fine or heavy deniers. There may or may not be a percentage of biconstituent fibres in that pile layer 26.

The layer 28 is a mixture of 50% fine biconstituent fibres and 50% polyolefin non-biconstituent fibres. The layers 26 and 28 are then placed against each other and passed through a needling machine that pushes needles through the exposed side of the layer 28 a small way into the layer 26 to cause fibres in that layer 28 to extend into the layer 26 to tack the layers together. The needles pick up the heavier denier, non-biconstituent fibres to a greater extent than the biconstituent fibres thereby increasing the ratio of biconstituent fibres at the exposed side of the layer 28.

The fabric is then heated. The biconstituent fibres behave as described above to interlock the fibres and to interlock the layers. As there is a relatively small amount of polypropylene in the biconstituent fibres and/or as the denier of the biconstituent fibres is significantly less than the denier of the non-biconstituent fibres the non-biconstituent fibres remain in their position, without being pulled out of their position. The layer 28 is sufficiently dense to give some structure to the layer to allow, for instance, tiles to be cut and subsequently laid. Thus the fabric will be able to flex slightly about the plane of the fabric but resistance to that flexure will be afforded. The degree of resistance can be altered by adjusting parameters such as the density of fibres in the layer 28, the denier of the biconstituent fibres or the other fibres or the ratio of biconstituent fibres to the other fibres or the needling function or any combination thereof.

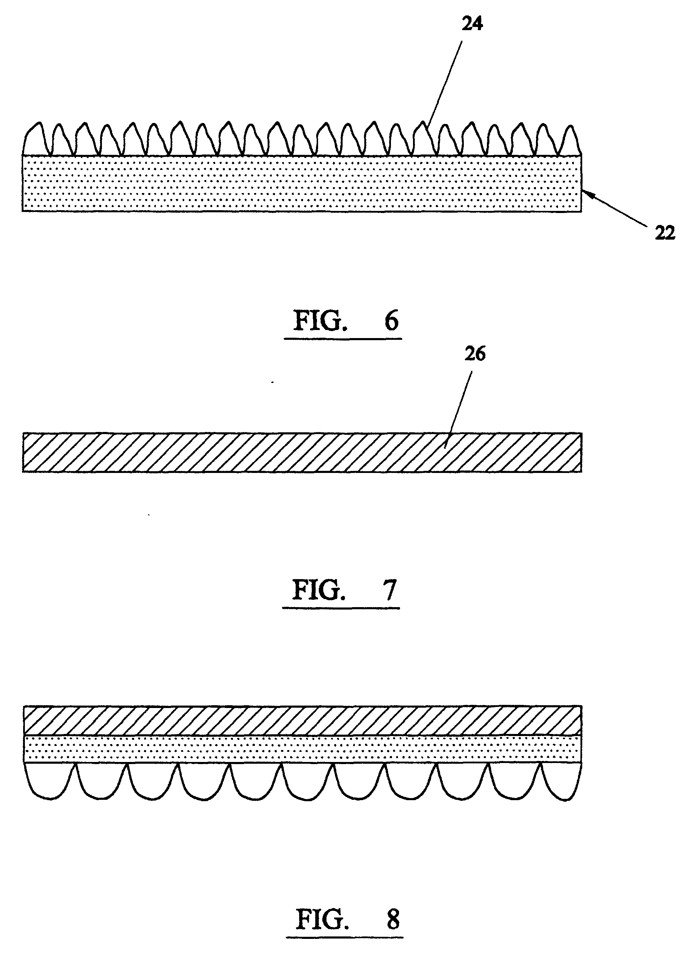

As shown in Figure 6, fabric 22 comprising biconstituent fibres of 15 denier and other fibres such as polypropylene of 65 and 90 denier have been needled together and subject to secondary needling to form a pile structure 24. The pile structure will be largely of non-biconstituent fibres as the needles tend to take the heavier denier fibres into the pile. The ratio of non-biconstituent fibres to biconstituent fibres may be greater than 80:20 or 70:30 or 50:50 or 30:70 by weight.

Figure 7 shows the backing 26 of the carpet. It comprises a blend of biconstituent fibres and 15 denier polypropylene fibres pre-needled to form a fabric without a pile. The ratio of non-biconstituent fibres to biconstituent fibres may be greater than 80:20 or 70:30 or 50:50 or 30:70 by weight but is preferably in the region of 50:50 by weight.

In Figure 8 of the pile layer of Figure 6 has needled into it the backing layer of Figure 7 with needles only protruding into the layer 22 and not the pile 24. The carpet 28 thus formed is heated to cause the biconstituent fibres to further interlock the fibres together, as described above, possibly without the shape of the pile changing and possibly without the non-biconstituent fibres altering their preheating orientation to any significant extent.

In a further floor covering (not shown) a blend of polyolefin or polypropylene or polyethylene fibres together with biconstituent fibres is formed into a fabric as discussed above. Ribs are formed on one side of the fabric by pushing needles having a recess in their tip through the fabric. The fabric is subsequently heated to draw the fibres in and to interlock the fibres together, as described above. The biconstituent fibres, in addition to drawing back into the main body of the fabric, also pull the fibres in the ribs back slightly towards the main body. Consequently any slight faults in the alignment of the ribs or the extent of the ribs from the body of the fabric (which differential may be 0.5 mm) are reduced.

In a further embodiment (not shown) a felt can be provided comprising solely biconstituent or biconstituent and other fibres which is not subject to the final needling stage. The felt can be heated with the same effects occurring as described above.

Although the description of the shrinkage of the biconstituent fibres has been described above as pulling the non-biconstituent fibres together, this is not necessarily the case. The non-biconstituent fibres may be of such a denier compared to the relatively thin biconstituent fibres that when a biconstituent fibre extends partially around two non-biconstituent fibres such that the biconstituent fibre is tending to pull those parts of the fibre towards each other, the resistant to that force afforded by the heavier denier fibres is such that further shrinkage is prevented thereby fixing those heavy denier fibres in position.

This is an important feature as the heavy denier fibres can remain in the position that they occupy without the fabric shrinking. It allows a shaped fabric to be provided, such as a floor carpet for a car that has to follow the contours of the body of the car without that fabric shrinking and changing its stage upon heating. Furthermore, the biconstituent fibres can be concentrated or located where required in the fibre to provide an optimum finished product.

Although the present invention has been primarily described in relation to fabrics for covering floors such as carpets and tiles, other uses may be made of the fabric. For instance, shoe felts and surfaces for playing sport may also be made.

It will be appreciated that all of the fabrics described herein are fully recyclable.

The non-biconstituent fibres may have a denier of 60 to 100 deniers and the biconstituent fibres may have a denier of 10 to 20 deniers.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A fabric (22) including at least some multiconstituent fibres (10) that are connected together at their abutting surfaces.

2. A fabric as claimed in claim 1, in which the multiconstituent fibres (10) are integral at their contacting surfaces.

3. A fabric as claimed in claim 1 or 2, in which the multiconstituent fibres are connected together by having been heated towards the melting point of an exterior portion of those fibres.

4. A fabric as claimed in any preceding claim, in which the multiconstituent fibres comprise an outer material (20) surrounding at least one portion (18) of another material.

5. A fabric as claimed in any preceding claim in which the ratio of the low melting point material (2) in a multiconstituent fibre, by weight, to the ratio of the weight of the fibre is 70 to 95%.

6. A fabric as claimed in any preceding claim including other non-multiconstituent material such as fibres.

7. A fabric as claimed in any preceding claim including at least two adjacent layers (26,28), at least one of which includes multiconstituent fibres.

8. A fabric as claimed in claim 7, in which the layers are connected together.

9. A fabric as claimed in any preceding claim including at least one layer (24) that includes a greater concentration of multiconstituent fibres (10) at one depth in that layer than at another depth (22).

10. A fabric as claimed in any preceding claim including multiconstituent fibres extending at least partly around non-multiconstituent fibres.

11. A fabric as claimed in any preceding claim including multiconstituent and non-multiconstituent fibres in which the denier of the multiconstituent fibres is less than the denier of the non-multiconstituent fibres.

12. A method of making a fabric, comprising incorporating at least some multiconstituent fibres into a fabric and connecting those fibres together at their abutting surfaces.

13. A method as claimed in claim 12, comprising directly connecting the fibres together at their abutting surfaces.

14. A method as claimed in claim 12 or 13, comprising connecting the multiconstituent fibres together by heating, without the application of pressure.

15. A method as claimed in any of claims 12 to 14, comprising including other non-multiconstituent material into the fabric.

16. A method as claimed in any of claims 12 to 15, comprising making a fabric (22) that includes at least one region that includes at least a greater concentration of multiconstituent fibres at one depth (24) than the concentration of multiconstituent fibres at another depth (22).

17. A method as claimed in any of claims 12 to 16, comprising causing multiconstituent fibres to extend at least partially around non-multiconstituent fibres.

18. A method as claimed in claim 17, comprising causing the multiconstituent fibres to reduce in length whereby multiconstituent fibres extend at least partially around non-multiconstituent fibres and extend in a generally straight direction between adjacent fibres that the multiconstituent fibres extend at least partially around.

19. A method as claimed in any of claims 12 to 18 comprising causing multiconstituent fibres to reduce in length and then relax.

20. A method as claimed in claim 17 or 18 comprising multiconstituent fibres causing non-multiconstituent fibres to be drawn towards each other.

21. A method as claimed in any of claims 12 to 19, comprising increasing the density of the fabric by causing the lengths of the multiconstituent fibres to decrease.

22. A method of making a fabric as claimed in any of claims 12 to 20, comprising forming a shaped or a structural fabric.
